# EUROPEAN PATENT APPLICATION

(11) **EP 4 155 587 A1**
(43) Date of publication of application: **29.03.2023**
(21) Application number: 22196331.7
(22) Date of filing: 19.09.2022
(51) Int. Cl.: F16J 15/10, F16J 15/12, F16L 23/18

(54) **HIGH TEMPERATURE FUEL SEALS AND METHODS OF MAKING THEREOF**

(30) Priority: 22.09.2021 US 202117482323
(71) Applicant: Hamilton Sundstrand Corporation, Charlotte, NC 28217-4578 (US)
(72) Inventor: GAGE, Marc E., Feeding Hills, MA (US)
(74) Representative: Dehns

(57) **Abstract**

In accordance with at least one aspect of this disclosure, a fuel seal (132) for an aircraft fuel system includes a seal ring (134) of a metallic material configured to retain a shape of the seal ring under compression, and a coating of elastomeric material (136), over molded onto the seal ring (134) and configured to conform to a shape of a sealing surface (138). In embodiments, the seal ring (134) and coating (136) can be configured to provide drop-tight sealing at a temperature of at least 400 degrees F. In certain embodiments, the seal ring (134) and coating (136) can be configured to seal one or more fuel system components of an aircraft fuel system (200).

## Description

### TECHNICAL FIELD

This disclosure relates generally to high temperature fuel seals, e.g. for use in aircraft fuel systems.

### BACKGROUND

Certain aircraft fuel system components, such as heat exchangers, for example, require sealing elements, to retain the fuel within the fuel system. These sealing elements are commonly fabricated from elastomeric materials. However, elastomeric materials are subject to compression set which can deform the material and can limit the useable life of the seal when used for extended periods at very high temperatures.

Therefore there remains a need in the art for more robust and reliable high temperature fuel seals. This disclosure provides a solution for this need.

### SUMMARY

In accordance with at least one aspect of this disclosure, a fuel seal for an aircraft fuel system includes a seal ring of a metallic material configured to retain a shape of the seal ring under compression, and a coating of elastomeric material, over molded onto the seal ring and configured to conform to a shape of a sealing surface. In embodiments, the seal ring and coating can be configured to provide drop-tight sealing at a temperature of at least 204.44 degrees Celsius (400 degrees F). In certain embodiments, the seal ring and coating can be configured to seal one or more fuel system components of an aircraft fuel system.

In certain embodiments, the metallic material can be or can include at least one of: stainless steel, stainless steel alloy, aluminum alloy, gold, silver, copper nickel alloy, and/or titanium. In certain embodiments, the elastomeric material can be or can include perfluoroelastomer (FFKM). In certain embodiments, the elastomeric material can be Kalrez^{®} 7800.

In certain embodiments, the seal ring and coating can be configured to provide drop-tight sealing at a temperature of at least 315.56 degrees Celsius (600 degrees F). In certain embodiments, the seal ring shape can be an o-ring. In certain embodiments, the seal ring shape can be selected from the group consisting of: a c-ring face seal, an axial face seal, an e-ring, an o-ring, a u-ring, and a wire ring.

In accordance with at least one aspect of this disclosure, an aircraft fuel system can include a fuel line configured to fluidly connect a fuel supply to a combustor of a gas turbine engine, and one or more fuel system components sealed to the fuel line with a fuel seal. In embodiments, the fuel seal can include, a seal ring of a metallic material configured to retain a shape of the seal ring under compression, and a coating of elastomeric material, over molded onto the seal ring and configured to conform to a shape of a sealing surface. In certain embodiments, the seal ring and coating are configured to provide drop-tight sealing at a temperature of at least 204.44 degrees Celsius (400 degrees F).

In accordance with at least one aspect of this disclosure, a method of making a fuel seal for an aircraft fuel system can include, forming a metallic material in a fuel seal shape and over molding an elastomeric material over the metallic material. In embodiments, the metallic material can be of a shape configured to retain its shape under compression and the elastomeric material can be of a material configured to conform to a shape of a sealing surface. In certain embodiments, the metallic material and the elastomeric material can be configured to provide drop-tight sealing at a temperature of at least 204.44 degrees Celsius (400 degrees F).

In certain embodiments, forming the metallic material in a fuel seal shape can include forming the metallic material into a c-ring face seal shape, an axial face seal shape, an e-ring shape, an o-ring shape, a u-ring shape, or a wire ring shape. In certain embodiments, the metallic material and the elastomeric material can be configured to provide drop-tight sealing at a temperature of at least 315.56 degrees Celsius (600 degrees F).

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic side cross-sectional view of a gas turbine engine constructed in accordance with this disclosure, showing a fuel line; and
Fig. 2 is an enlarged partial schematic cross sectional view of the fuel line of Fig. 1 showing a seal ring.

### DETAILED DESCRIPTION

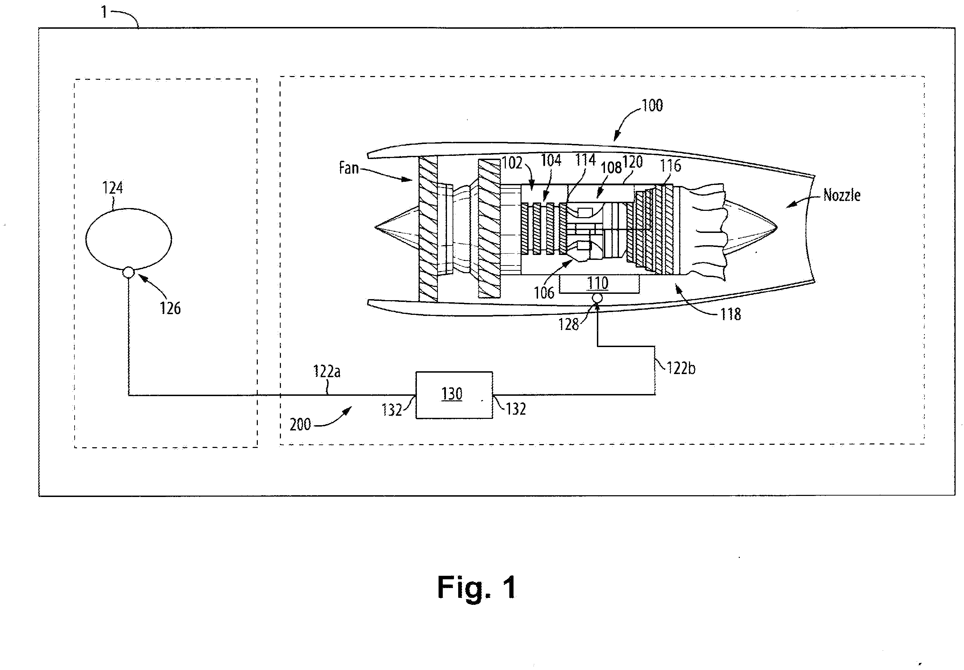

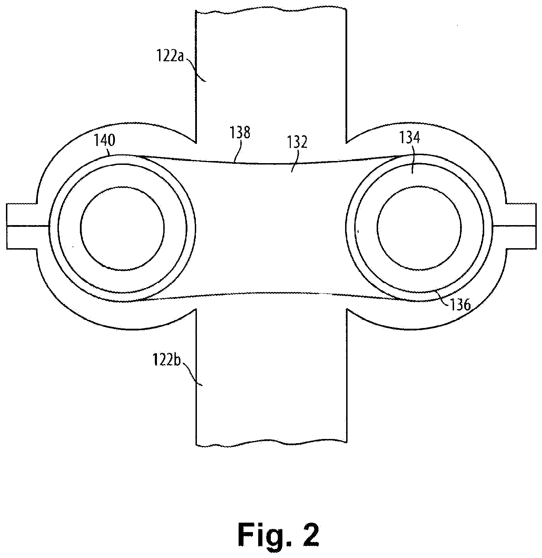

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2 Certain embodiments described herein can be used to improve sealing within a fuel system.

In certain embodiments, referring to Fig. 1, in accordance with at least one aspect of this disclosure, an aircraft 1 can include an engine 100 and a fuel system 200. The engine 100 includes a compressor section 102 having a compressor 104 in a primary gas path 106 to supply compressed air to a combustor 108 of the aircraft engine 100. The primary gas path 106 includes the compressor 104, the combustor 108 fluidly connected to an outlet 114 of the compressor 104, a nozzle manifold 110 for issuing fluid to the combustor 108, and a turbine section 116 fluidly connected to an outlet 118 of the combustor 108, where the turbine section 116 is mechanically connected to the compressor 104 to drive the compressor 104.

The fuel system 200 can include a fuel line 122 configured to fluidly connect a fuel supply 124 to the combustor 108 of the gas turbine engine 100, which feeds the nozzle manifold 110. The fuel line 122 includes an inlet end 126 and an outlet end 128 to fluidly connect the fuel supply 124 to the combustor 108 through the plurality of fuel nozzles 120. One or more fuel system components 130 (e.g. a heat exchanger) may be included in the fuel line 122 and can define an upstream portion 122a of the fuel line 122 and a downstream portion 122b of the fuel line 122, where the upstream and downstream portions 122a, 122b of the fuel line 122 can be sealed to the fuel system component 130 or the upstream and downstream portions 122a, 122b of the fuel line 122 via a fuel seal 132.

Referring now to Fig. 2, the fuel seal 132 can include a seal ring 134 of a metallic material configured to retain a shape of the seal ring 134 under compression, and a coating 136 of elastomeric material, over molded onto the seal ring 134 and configured to conform to a shape and surface finish of a sealing surface 138. The shape of the seal ring 134 can be any suitable shape to match the sealing surface 138 of the fuel system component, for example an o-ring as shown, however, the seal ring 134 can also be a c-ring face seal, an axial face seal, an e-ring, a u-ring, or a wire ring. In embodiments, the seal ring 134 and coating 136 can be configured to provide drop-tight sealing of the fuel system component at a temperature of at least 204.44 degrees Celsius (400 degrees F), and in certain embodiments, at least 315.56 degrees Celsius (600 degrees F), and in certain embodiments up to about 326.67 degrees Celsius (620 degrees F).

In embodiments, the metallic material of the seal ring 134 can be or can include at least one of: stainless steel, stainless steel alloy, aluminum alloy, gold, silver, copper nickel alloy, and/or titanium. Any other suitable metallic material is contemplated herein. In certain embodiments, the elastomeric material of the coating 136 can be or can include polytetrafluoroethylene (PTFE) and/or perfluoroelastomer (FFKM). In embodiments, the perfluoroelastomer can be or include any one or all of the following perfluoroelastomer materials, Chemraz^{®} FFKM (available from Green Tweed of Harleysville, Pennsylvania), Perlast^{®} (available from Precision Polymer Engineering of San Jose, California), GPlast (available from Gapi Ltd of Rotherham, United Kingdom), Simriz^{®} (available from Freudenberg & Co. of Weinheim, Germany), and/or Kalrez^{®}(available from DuPont of Wilmington, Delaware). In certain embodiments, the elastomeric material can be Kalrez^{®} 7800 which can minimize corrosion of the seal ring 134 to which it is bonded, or in the seal ring groove 140, in both static and dynamic environments versus a typical high temperature perfluoroelastomer seals, for example. Any other suitable elastomeric material is contemplated herein.

In accordance with at least one aspect of this disclosure, a method of making a fuel seal (e.g. fuel seal 132) for an aircraft fuel system (e.g. fuel system 200) can include, forming a metallic material (e.g. one or more of stainless steel, stainless steel alloy, aluminum alloy, gold, silver, copper nickel alloy, and/or titanium) in a fuel seal shape (e.g. c-ring face seal, an axial face seal, an e-ring, a u-ring, or a wire ring ) and over molding an elastomeric material (e.g. PTFE, FFKM, and/or Kalrez 7800) over the metallic material. In embodiments, the metallic material can be of a shape configured to retain its shape under compression (e.g. the shape should be such that under intense temperature and pressure for extended periods of time, the shape does not substantially deform) and the elastomeric material can be of a material configured to conform to a shape of a sealing surface (e.g. conform to the shape and surface finish of the sealing surface to provide drop tight sealing against the sealing surface).

In embodiments, the fuel seal 132 provides a method of improving the sealing performance of high temperature aircraft fuel systems by using a perfluoroelastomer coated metal ring in place of the commonly used fully elastomeric sealing element. Fully elastomeric sealing elements can experience compression set at elevated temperatures, which can lead to leakage. Metal sealing rings can be subject to leakage due to their inability to conform to rough sealing surfaces. However, the fuel seal 132 having a perfluoroelastomer coated seal ring can take advantage of the metal's resistance to compression set, while using the fuel resistant perfluoroelastomer coating to provide the ability to conform to the rough sealing surfaces that may be present in the aircraft fuel system.

Embodiments can provide improved sealing performance for aircraft fuel systems versus a fully elastomeric sealing element or a metal sealing ring. Embodiments can include hybrid sealing elements which can provide reliable sealing of jet fuel for long periods of time at temperatures up to and in certain embodiments above 315.56 degrees Celsius (600 degrees F) that are desired for very high temperature aircraft fuel system components.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A fuel seal (132) for an aircraft fuel system, comprising:
a seal ring (134) of a metallic material configured to retain a shape of the seal ring under compression; and
a coating of elastomeric material (136), over molded onto the seal ring and configured to conform to a shape of a sealing surface (138),
wherein the seal ring (134) and coating (136) are configured to provide drop-tight sealing at a temperature of at least 204.44 degrees Celsius (400 degrees F).

2. The fuel seal as recited in claim 1, wherein the metallic material is or includes at least one of: stainless steel, stainless steel alloy, aluminum alloy, gold, silver, copper nickel alloy, and/or titanium.

3. The fuel seal as recited in claim 1 or 2, wherein the elastomeric material is or includes perfluoroelastomer (FFKM); and/or wherein the elastomeric material is Kalrez^{®} 7800.

4. The fuel seal as recited in any preceding claim, wherein the seal ring (134) and coating (136) are configured to provide drop-tight sealing at a temperature of at least 315.56 degrees Celsius (600 degrees F).

5. The fuel seal as recited in any preceding claim, wherein the seal ring shape is an o-ring.

6. The fuel seal as recited in any preceding claim, wherein the seal ring shape is selected from the group consisting of: a c-ring face seal, an axial face seal, an e-ring, an o-ring, a u-ring, and a wire ring.

7. The fuel seal as recited in any preceding claim, wherein the seal ring (134) and coating (134) are configured to seal one or more fuel system components of an aircraft fuel system.

8. An aircraft fuel system (200), comprising:
a fuel line (122) configured to fluidly connect a fuel supply (124) to a combustor (108) of a gas turbine engine (100); and
one or more fuel system components (130) sealed to the fuel line with a fuel seal, the fuel seal (132) including:
a seal ring (134) of a metallic material configured to retain a shape of the seal ring under compression; and
a coating of elastomeric material (136), over molded onto the seal ring and configured to conform to a shape of a sealing surface (138),
wherein the seal ring (134) and coating (136) are configured to provide drop-tight sealing at a temperature of at least 204.44 degrees Celsius (400 degrees F).

9. The fuel system as recited in claim 8, wherein the metallic material is or includes at least one of: stainless steel, stainless steel alloy, aluminum alloy, gold, silver, copper nickel alloy, and/or titanium.

10. The fuel system as recited in claim 8 or 9, wherein the elastomeric material is or includes perfluoroelastomer (FFKM); and/or wherein the second elastomeric material is Kalrez^{®} 7800.

11. The fuel system as recited in any of claims 8-10, wherein the seal ring (134) and coating (136) are configured to provide drop-tight sealing at a temperature of at least 315.56 degrees Celsius (600 degrees F).

12. The fuel system as recited in any of claims 8-11, wherein the seal ring (134) is an o-ring; or wherein the seal ring (134) is selected from the group consisting of: a c-ring face seal, an axial face seal, an e-ring, an o-ring, a u-ring, and a wire ring.

13. A method of making a fuel seal for an aircraft fuel system, comprising:
forming a metallic material in a fuel seal shape, and
over molding an elastomeric material over the metallic material,
wherein the metallic material is of a shape configured to retain its shape under compression; wherein the elastomeric material is of a material configured to conform to a shape of a sealing surface, wherein the metallic material and the elastomeric material are configured to provide drop-tight sealing at a temperature of at least 204.44 degrees Celsius (400 degrees F).

14. The method as recited in claim 13, wherein forming a metallic material in a fuel seal shape includes, forming the metallic material into a c-ring face seal shape, an axial face seal shape, an e-ring shape, an o-ring shape, a u-ring shape, or a wire ring shape.

15. The method as recited in claim 13 or 14, wherein the metallic material and the elastomeric material are configured to provide drop-tight sealing at a temperature of at least 315.56 degrees Celsius (600 degrees F).
